# FASCICULE DE BREVET EUROPEEN

(11) **EP 2 316 535 B1**
(45) Date de publication et mention de la délivrance du brevet: **11.03.2020**
(21) Numéro de dépôt: 10188321.3
(22) Date de dépôt: 21.10.2010
(51) Int. Cl.: A62B 35/04, F16G 11/12

(54) **Dispositif absorbeur-tendeur de câble pour ligne de vie**
Kabelspann- und Absorbervorrichtung für eine Rettungsleine
Cable tensioning and absorber device for a lifeline

(30) Priorité: 28.10.2009 FR 0957555
(43) Date de publication de la demande: 04.05.2011
(73) Titulaire: Ateliers LR Etanco, 78230 Le Pecq (FR)
(72) Inventeur: Figueiredo, Jérémy, 78230, Le Pecq (FR); Leroy, Alain, 78820, Juziers (FR)
(74) Mandataire: Mazabraud, Xavier

(56) Documents cités:
- WO-A1-01/46601
- WO-A1-2009/013479
- GB-A- 1 186 332
- GB-A- 2 357 563
- JP-A- 2000 202 053

## Description

L'invention concerne le domaine des lignes de vie, mises en place notamment en vue de travaux à effectuer en altitude. Plus particulièrement, elle concerne un tendeur de câble comprenant un dispositif absorbeur de charge impulsionnelle pour une ligne de vie.

Une ligne de vie est un câble ou une corde installé entre deux points fixes élevés d'une structure comportant généralement un absorbeur de charge et un tendeur. Les personnes amenées à travailler sur cette structure, par exemple un toit, portent un harnais auquel est reliée une longe, et s'accrochent sur la ligne de vie par le biais d'un mousqueton ; elles restent ainsi relativement libres de leurs mouvements et conservent l'usage de leurs deux mains. En cas de chute, le pré-tensionnement imprimé au câble fait que la personne chute d'une faible hauteur et l'absorbeur absorbe l'énergie cinétique due à la chute de façon à lui éviter un choc trop brutal. La ligne de vie est un équipement indispensable et réglementaire pour conduire des travaux en altitude en toute sécurité. Il importe qu'elle puisse être mise en place le plus facilement possible car, par hypothèse, la personne qui la met en place n'en bénéficie pas encore.

En pratique, l'installation de la ligne de vie nécessite deux opérateurs :
- un premier opérateur relie un absorbeur de charge à un point fixe de la structure et relie une extrémité du câble à l'absorbeur par l'intermédiaire par exemple d'une manille,
- un second opérateur relie un tendeur à un autre point fixe de la structure, relie ce tendeur à l'autre extrémité du câble, assure lui même le pré-tensionnement du câble puis tend le câble en actionnant le tendeur.

Cette disposition est très pénalisante car elle nécessite deux opérateurs. Si un opérateur effectue seul ces deux opérations, cela lui impose d'effectuer des allers - retours entre les deux points fixes, ce qui est dangereux.

De plus, les absorbeurs de l'état de l'art, par exemple des ressorts fonctionnant en compression, exercent des efforts trop importants sur la structure en cas de chute.

Des dispositifs absorbeurs de charge impulsionnelle pour ligne de vie sont par exemple connus des documents GB 2 357 563 A1, WO 2009/013479 A1 et WO 01/46601 A1.

La présente invention vise à faciliter la mise en place d'une ligne de vie et notamment permettre sa pose par une seule personne utilisant un seul dispositif, et à réduire l'effort sur la structure.

A cet effet, l'invention propose un dispositif absorbeur-tendeur pour câble de ligne de vie comprenant un dispositif tendeur pour tendre le câble et un ensemble absorbeur pour absorber une charge impulsionnelle selon la revendication 1.

Le dispositif absorbeur selon l'invention prend la forme d'un ressort, mais à la différence de ce dernier il fonctionne au moins partiellement dans le domaine plastique et non uniquement dans le domaine élastique. Par exemple, le matériau déformable peut être de l'acier doux. L'acier doux se caractérise par sa prédisposition aux déformations plastiques à charge constante. En conséquence, il est capable de s'allonger sur une grande amplitude, repoussant ainsi la limite de rupture.

Avantageusement, les spires de l'enroulement peuvent être jointives, ce qui facilite la fixation de l'enroulement

Des modes de réalisation et des variantes seront décrits ci-après, à titre d'exemples non limitatifs, avec référence aux dessins annexés dans lesquels :
Les figures 1A et 1B représentent un dispositif absorbeur - tendeur respectivement en perspective et en élévation,
Les figures 2A et 2B représentent un dispositif anti-retour pour câble respectivement en perspective et en coupe verticale suivant A-A',
Les figures 3A, 3B et 3C représentent un dispositif de façonnage d'une boucle sur un câble respectivement en élévation (3A et 3B) et en perspective (3C),
La figure 3D représente en perspective une platine de serrage du dispositif de façonnage d'une boucle sur un câble,
La figure 4 représente un dispositif tendeur de câble à chariot en élévation,
Les figures 5A et 5B représentent un dispositif témoin de charge respectivement en élévation et en perspective,
La figure 6 représente un dispositif absorbeur de charge impulsionnelle en élévation.

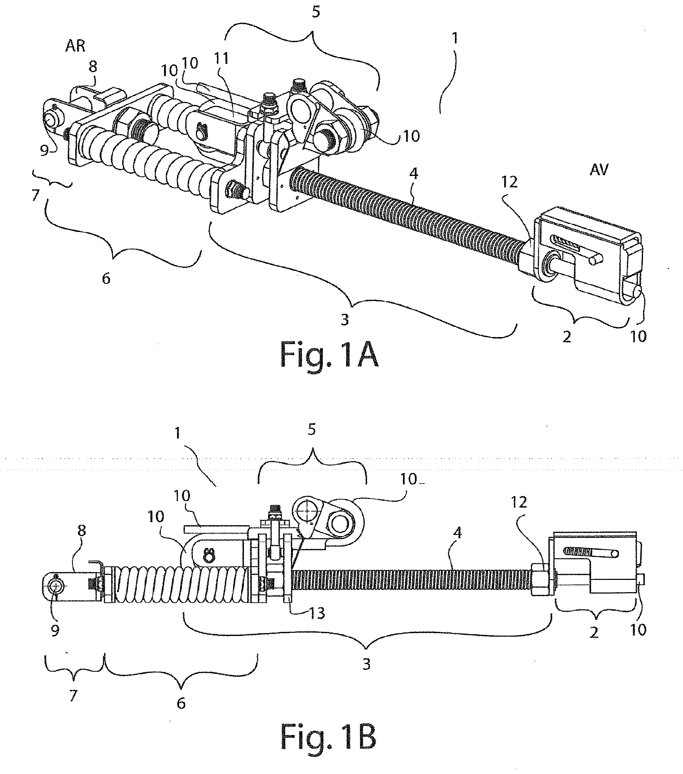

Le dispositif absorbeur - tendeur 1 illustré en figure 1 se présente sous la forme d'un corps allongé comportant d'avant en arrière, c'est à dire de droite à gauche sur la figure 1 :
- un dispositif anti-retour 2,
- un dispositif tendeur de câble à chariot 3 comportant un tube fileté 4,
- un dispositif de façonnage d'une boucle sur un câble 5,
- un ensemble absorbeur de charge impulsionnelle 6,
- un dispositif témoin de charge 7.

A son extrémité arrière, le dispositif absorbeur - tendeur 1 comporte une pièce 8 formant manille comprenant un axe 9 permettant de fixer le dispositif 1 à un point fixe d'une structure élevée.

Dans la suite du texte, les mots « avant » et « arrière » feront toujours référence à cette orientation du dispositif 1.

Le câble 10 destiné à former la ligne de vie pénètre dans le dispositif absorbeur - tendeur 1 par le dispositif anti-retour 2, traverse le tube 4, s'enroule sur 180° sur un rouleau 11, et pénètre dans le dispositif de façonnage d'une boucle 5 sur lequel il est fixé. Le câble est mis sous tension en entraînant en rotation le tube 4 par l'intermédiaire de l'écrou 12, ce qui provoque le déplacement vers l'avant du dispositif de façonnage d'une boucle 5 qui joue le rôle de chariot. Lorsqu'une tension prédéterminée est atteinte, le dispositif témoin de charge 7 se déclanche, avertissant l'opérateur que la tension de service est atteinte. En cas de chute d'un utilisateur relié à la ligne de vie, l'absorbeur de charge impulsionnelle 6 absorbe l'énergie cinétique de chute. Le dispositif absorbeur - tendeur 1 remplit donc plusieurs fonctions :
- façonnage d'une boucle sur le câble,
- anti-retour du câble,
- tendeur de câble,
- témoin de charge,
- absorbeur de charge impulsionnelle.

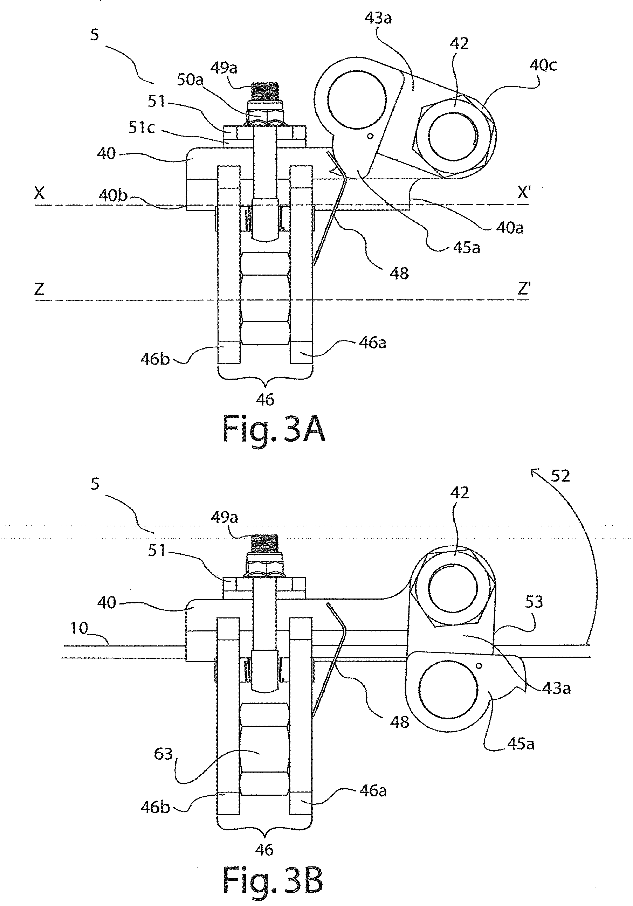

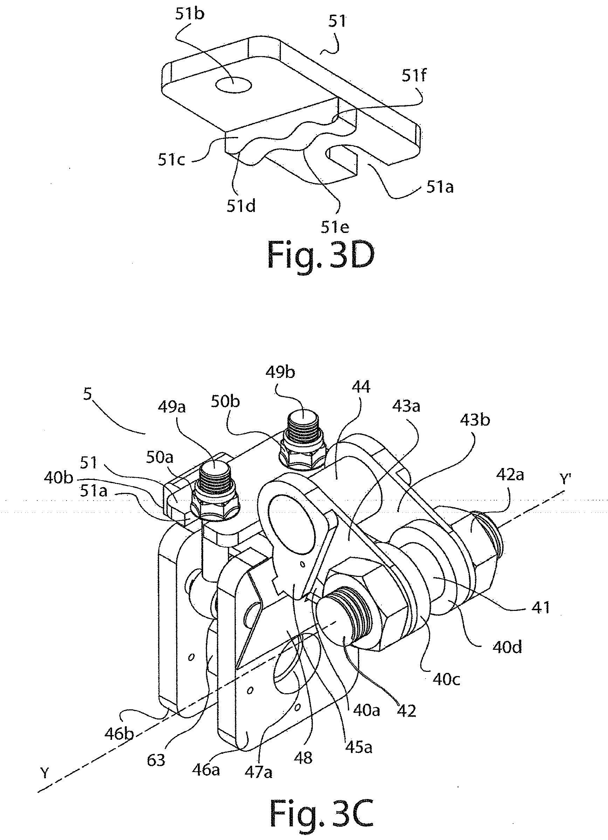

Le dispositif de façonnage d'une boucle sur un câble 5 illustré par les figures 3A à 3C comporte une gouttière 40 qui s'étend selon un axe X-X', et comportant une partie avant 40a et une partie arrière 40b. Dans sa partie avant 40a, les flancs de la gouttière 40 sont prolongés par des excroissances 40c et 40d comportant chacune une ouverture en regard l'une de l'autre. Une came d'enroulement 41 est disposée entre ces croissances 40c et 40d et dans ces ouvertures selon un axe Y-Y' orthogonal à l'axe X-X' de la gouttière 40 et au-dessus de cet axe; elle est maintenue à cet emplacement par un moyen de fixation coaxial, par exemple un ensemble vis - écrou 42. La came 41 est préférentiellement libre en rotation autour de l'axe Y-Y', mais elle pourrait être fixe.

Le dispositif de façonnage 5 comporte en outre deux biellettes 43a et 43b parallèles montées librement mobiles en rotation autour de l'axe Y-Y'. Ces biellettes 43a et 43b sont en outre fixes par rapport à l'ensemble vis - écrou 42, de telle sorte qu'elles peuvent être actionnées en rotation par exemple par l'intermédiaire de la tête 42a de la vis.

A leur extrémité distante de l'axe Y-Y', les biellettes 43a et 43b sont réunies par une entretoise 44. L'ensemble came 41, biellettes 43a et 43b et entretoise 44 forment un passage de câble 53 de forme sensiblement rectangulaire dans lequel un câble peut circuler.

Les biellettes 43a et 43b sont prolongées chacune à leur extrémité distante de l'axe Y-Y' par deux crochets 45a et 45b (non visible), fixes par rapport aux biellettes et qui s'étendent dans une direction sensiblement orthogonale à celle des biellettes.

La gouttière 40 est fixée en partie haute d'un support 46 qui comprend deux plaques, une plaque avant 46a et une plaque arrière 46b, parallèles et sensiblement orthogonales à l'axe X-X' de la gouttière 40. Les plaques 46a et 46b comportent chacune en partie basse une ouverture 47a, 47b d'axe Z-Z' parallèle à l'axe X-X' de la gouttière 40. La plaque avant 46a comporte sur sa face avant un ressort à lame 48 comportant deux ouvertures dans lesquelles peuvent prendre place les extrémités des crochets 45a et 45b. Grâce à ce ressort 48, les biellettes 45a et 45b et donc le passage de câble 53 peuvent être maintenus rabattus vers l'arrière de la gouttière 40.

Le dispositif de façonnage 5 comporte en outre des moyens de serrage du câble comprenant deux vis 49a et 49b, montées entre les plaques 46a et 46b et de part et d'autre de la gouttière 40, les têtes de ces vis étant articulées autour d'axes respectifs parallèles à l'axe X-X' de la gouttière. Ces vis 49a et 49b sont donc imperdables.

Les moyens de serrage comportent en outre une platine 51 sensiblement rectangulaire et deux écrous 50a et 50b montés chacun sur une vis respective. Les vis 49a et 49b traversent la platine 51 par deux ouvertures, une ouverture en forme d'encoche 51a et une ouverture en forme d'orifice 51b. Lorsque la platine 51 est montée sur la vis 49b l'écrou 50a étant en place, la platine 51 est imperdable. Comme illustré par la figure 3D, la platine 51 comporte en outre sur sa face inférieure une partie saillante ou pince 51c qui peut pénétrer entre les flancs de la gouttière 40. Cette pince 51c n'est pas lisse mais comporte un profil en forme de vague comportant trois sommets 51d, 51e et 51f afin de répartir l'effort de serrage sur le câble sur ces trois sommets.

Le dispositif est utilisé comme suit, après montage de la platine 51 sur la vis 49b :
- le câble 10 est glissé dans la gouttière 40 par sa partie arrière 40b, les biellettes 43a et 43b étant orientées vers le bas, de façon à ce que la câble franchisse le passage de câble 53 que constitue les biellettes 43a et 43b, l'entretoise 44 et la came d'enroulement 41, comme illustré en figure 3B,
- actionnement de l'ensemble vis - écrou 42 en rotation de façon à rabattre le passage de câble 53 vers l'arrière du dispositif 5, flèche 52 ; l'entretoise 44 appuie sur le câble 10 et ce mouvement provoque son enroulement autour de la came d'enroulement 41 et rabat le câble sur lui-même,
- encliquetage des crochets 45a et 45b dans les ouvertures du ressort à lame 48 ; le câble se trouve alors rabattu sur lui-même à l'intérieur de la gouttière 40,
- positionnement de la platine 51 au-dessus de la gouttière 40 et mise en prise de la vis 49a dans l'encoche 51a de la platine 51,
- serrage des écrous 50a et 50b ; la pince 51c pénètre entre les flancs de la gouttière 40 et appuie sur les deux brins du câble rabattus sur lui-même.

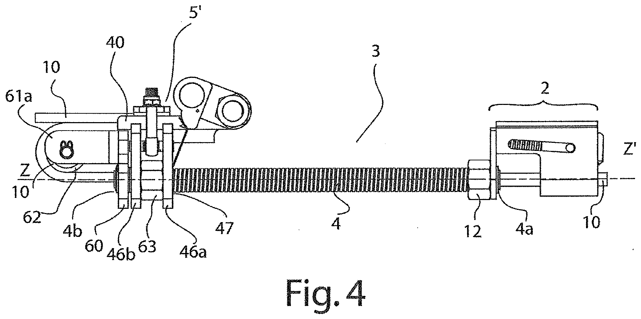

Le dispositif tendeur de câble 3 illustré en figure 4 comporte un tube 4 et moyen de support 60 sensiblement plan et comportant deux faces parallèles, une première face sur laquelle le tube 4 est monté rotatif et une seconde face sur laquelle est disposé un moyen d'enroulement ou rouleau 11.

Le tube 4 est fileté et monté rotatif par son extrémité arrière 4b sur la face avant du support 60, dans une ouverture non filetée ménagée dans ce support 60. Sur sa face arrière, le support 60 comporte deux flasques 61a et 61b (non visible) entre lesquelles un rouleau 11 est monté en rotation selon un axe sensiblement orthogonal à l'axe Z-Z' du tube 4. L'axe du rouleau 11 est situé au-dessus de l'axe Z-Z' du tube de façon que le câble 10 puisse s'enrouler sur ce rouleau lorsqu'il sort du tube.

Le dispositif tendeur de câble 3 comporte en outre un chariot 5' auquel une extrémité du câble est assujettie, apte à se déplacer le long du tube 4, entre son entrée 4a et le support 60. Dans le mode de réalisation décrit, ce chariot 5' est constitué principalement par le dispositif de façonnage d'une boucle 5 précédemment décrit, les deux dispositifs coopérant de la façon suivante : le tube 4 traverse les ouvertures 47a et 47b (non visible) ménagées dans les plaques 46a et 46b du dispositif de façonnage d'une boucle 5 ; entre les ouvertures 47a et 47b, un écrou 63 est fixé aux plaques 46a et 46b, sur lequel le tube fileté 4 est en prise.

Le tube 4 peut comporter un moyen de préhension pour sa mise en rotation, par exemple un écrou 12 fixé au tube 4 au voisinage de son extrémité avant 4a.

De cette façon, lorsque le tube 4 est mis en rotation, par exemple en actionnant l'écrou 12, le chariot 5' peut se déplacer le long du tube 4 dans un sens ou dans l'autre. La tension du câble est obtenue en déplaçant le chariot vers l'entrée 4a du tube 4.

Une alternative pour le trajet retour du câble entre le moyen d'enroulement 11 et le chariot est :
- le support 60 peut s'étendre au-dessus du tube 4 en vue de face sur une longueur inférieure ou égale au diamètre du moyen d'enroulement 11, de sorte que le passage retour du câble s'effectue au-dessus du moyen de support 60,
- le support 60 comporte une seconde ouverture traversante disposée au-dessus du moyen d'enroulement 11 en vue de face, de sorte que le passage retour du câble s'effectue au travers de cette seconde ouverture (non représenté).

Le dispositif est utilisé comme suit :
- enfiler le câble 10 dans le tube 4 par son extrémité avant 4a,
- à la sortie 4b du tube 4, enrouler le câble sur le rouleau 11 sur un demi tour,
- effectuer un pré-tensionnement du câble ; à cet effet, il est avantageux de disposer d'un dispositif anti-retour 2 fixé à l'avant du tube 4,
- présenter le câble au dispositif de façonnage d'une boucle 5, et façonner cette boucle comme précédemment décrit, ce qui implique une fixation du câble sur ce dispositif,
- actionner le tube 4 en rotation, de façon à provoquer le déplacement du chariot vers l'avant du tube 4 et par conséquent la tension du câble.

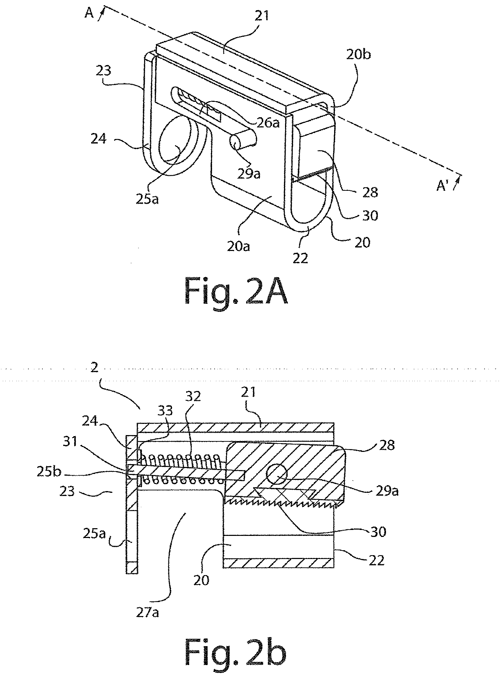

Le dispositif anti-retour 2 pour tendeur de câble 3, illustré par les figures 2A et 2B, comporte une pièce en forme de gouttière 20 dont les flancs 20a et 20b sont allongés et parallèles, fermée par un « toit » 21, à l'intérieur de laquelle le câble peut prendre place. Le dispositif 2 présente une face avant 22 et une face arrière 23, le câble pénétrant dans le dispositif 2 par la face avant 22. La partie arrière 23 du dispositif 2 comprend une plaque de fixation 24 fixée à l'extrémité arrière de la gouttière 20. Cette plaque 24 comporte une première ouverture traversante 25a colinéaire avec la gouttière 20, pour le montage du dispositif anti-retour 2 sur un tube 4 et la sortie du câble.

Les flancs 20a et 20b de la pièce 20 comportent chacun une ouverture 26a et 26b (non visible), rectiligne et inclinée vers l'avant du dispositif 2 par rapport à la gouttière 20 et, en partie arrière, une échancrure 27a et 27b (non visible). Les ouvertures 26a et 26b sont en regard l'une de l'autre.

A l'intérieur du dispositif anti-blocage 2 se trouve en outre une mâchoire formant noyau de blocage 28, de forme sensiblement parallélépipédique, qui prend place entre les flancs 20a et 20b de la gouttière 20. Le noyau de blocage 28 comporte :
- d'une part deux ergots 29a et 29b (non visible), alignés, qui s'étendent perpendiculairement à partir des faces du noyau de blocage parallèles aux flancs 20a et 20b de la gouttière 20,
- d'autre part un patin en matériau à coefficient de frottement élevé, par exemple en caoutchouc 30, cranté, fixé en queue d'aronde sur la face inférieure du noyau de blocage, tournée vers le fond de la gouttière 20. Le patin en caoutchouc 30 sert à assurer un blocage efficace du câble sans blesse ce dernier.

Chaque ergot 29a, 29b coulisse à l'intérieur d'une ouverture respective 26a, 26b. Ils maintiennent le noyau de blocage 28 à l'intérieur de la pièce en forme de gouttière 20.

Le dispositif anti-retour 2 comporte en outre un moyen de rappel situé entre les flancs de la gouttière, qui repousse le noyau de blocage dans la position de blocage. A cet effet, le noyau de blocage 28 comporte une tige 31 qui s'étend de façon sensiblement perpendiculaire à partir de sa face arrière. Cette tige 31 traverse une seconde ouverture 25b ménagée dans la plaque 24, au-dessus de la première ouverture 25a, et une rondelle 33 coaxiale. Autour de la tige 31 s'enroule un ressort 32 travaillant en compression, qui prend appui d'une part sur la face arrière du noyau de blocage 28 et d'autre part sur la plaque de fixation 24 par l'intermédiaire d'une rondelle 33. Grâce à des dispositions, le noyau de blocage 28 est maintenu repoussé vers l'avant du dispositif 2 de façon élastique. Compte tenu de l'inclinaison des ouvertures 26a et 26b, le noyau de blocage 28 se rapproche du fond de la gouttière 20 lorsqu'il se déplace vers l'avant.

Le dispositif anti-blocage comporte en conséquence deux modes de fonctionnement :
- lorsque le câble circule d'avant en arrière, le noyau de blocage 28, qui frotte sur le câble, est repoussé vers l'arrière et s'éloigne du fond de la gouttière 20 ; le câble circule normalement,
- lorsque le câble est tiré d'arrière en avant, le noyau de blocage 28 est entraîné vers l'avant et presse le câble sur le fond de la gouttière 20 par effet de coin ; le câble est bloqué. L'inclinaison des ouvertures 26a et 26b, les dimensions du noyau de blocage 28, l'épaisseur du patin 30 et le diamètre du câble utilisé sont en relation pour que ce blocage intervienne avant que les ergots 29a et 29b arrivent en bout de course.

Des alternatives aux dispositions précédentes sont par exemple :
- les ouvertures 26a et 26b peuvent être courbes,
- elles ne sont pas obligatoirement en regard l'une de l'autre, et les ergots 29a et 29b ne sont pas obligatoirement alignés, l'important étant qu'à une ouverture corresponde un ergot respectif, et que les ouvertures soient parallèles,
- les échancrures 27a et 27b, qui servent à assurer la visibilité du câble à l'intérieur du dispositif anti-blocage 2, peuvent être omises,
- un autre mode de fixation du patin 30 est possible, tel qu'un collage,
- le noyau de blocage 28 peut être maintenu repoussé vers l'avant du dispositif 2 par un autre moyen élastique, tel qu'un ressort à lame.

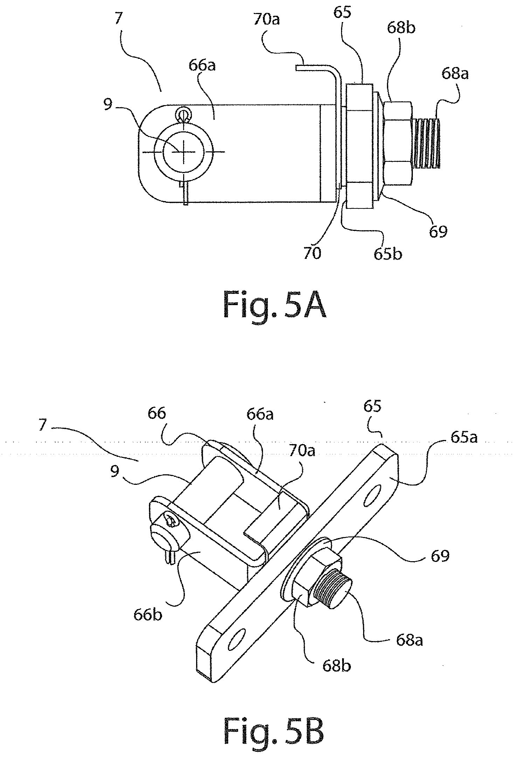

Le dispositif témoin de charge 7 pour tendeur de câble 3, illustré en figures 5A et 5B, comporte un premier élément constitué d'une plaque 65, comportant une face avant 65a et une face arrière 65b. Le dispositif témoin 7 peut être fixé par exemple à un dispositif de mise en tension d'un câble, tel que le dispositif tendeur de câble 3 déjà décrit, par cette plaque 65. Le dispositif témoin 7 comprend un second élément constitué d'une pièce 66 en forme de cavalier ou de manille. Ce cavalier comporte deux branches sensiblement parallèles 66a et 66b reliées par une portion sensiblement plane 66c. Les branches 66a et 66b comportent des ouvertures permettant de recevoir un axe 9 pour la fixation du dispositif par exemple au point fixe d'une structure élevée.

La plaque 65 et la portion 66c du cavalier 66 comportent chacun une ouverture, et sont fixés l'une à l'autre par un ensemble vis - écrou 68a et 68b traversant ces ouvertures. Le dispositif témoin 7 comporte en outre une rondelle conique 69 dont la pression d'écrasement est calibrée, par exemple une rondelle Belleville, montée sur la vis 68a, entre l'écrou 68b et la plaque 65 dans l'exemple illustré en figures 5A et 5B, mais elle pourrait être montée entre la tête de la vis 68a et la portion 66c du cavalier 66.

Entre le cavalier 66 et la plaque 65 se trouve une rondelle témoin 70 également traversée par la vis 68a, pouvant prendre la forme d'une plaquette comportant un rebord 70a parallèle à la vis 68a, bien visible de l'utilisateur du dispositif témoin 7.

Le dispositif témoin de charge 7 est par exemple installé entre un point fixe relié à l'axe 9 et un tendeur de câble relié à la plaque 65. Lorsque l'utilisateur exerce une tension sur le câble, cette tension se traduit par une pression exercée sur la rondelle conique 69. Lorsque la tension atteint une certaine valeur, la rondelle conique s'écrase brusquement, ce qui provoque un jeu entre la plaque 65 et le cavalier 66 et ce qui libère la rondelle témoin 70 autour de la vis 68a. L'utilisateur peut être ainsi averti qu'il a atteint une tension suffisante sur le câble.

Le dispositif n'est pas limité à l'usage d'une seule rondelle conique : plusieurs rondelles peuvent être montées en série sur la même vis, et/ou en parallèle sur plusieurs vis.

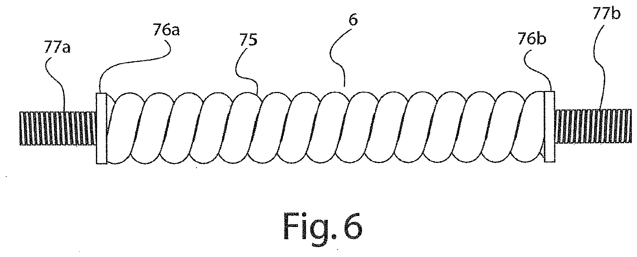

Le dispositif absorbeur de charge impulsionnelle 6 pour tendeur de câble 3, illustré par la figure 6, comporte un enroulement qui s'étend selon une direction rectiligne 75 de matériau déformable, par exemple de l'acier doux, donc les spires sont jointives.

A chacune de ses extrémités cet enroulement 75 comporte un moyen de fixation comprenant :
- une platine 76a, 76b de même diamètre que l'enroulement 75, fixée à une extrémité respective de l'enroulement par exemple par soudage,
- une vis 77a, 77b, fixée à une platine respective, qui s'étend dans la même direction que l'enroulement.

Selon l'invention, le tendeur de câble 3 comporte un dispositif absorbeur de charge 6 comportant deux enroulements qui s'étendent dans des directions sensiblement parallèles, reliés à leurs extrémités respectives par deux supports en forme de plaque 60 et 65 par le biais des platines et vis de fixation. Comme décrit plus haut, le support 60 fait partie intégrante du tendeur de câble 3, si bien que le tendeur de câble 3 et l'absorbeur 6 sont indissociables.

## Revendications

1. Dispositif absorbeur-tendeur (1) pour un câble (10) d'une ligne de vie, comprenant un dispositif tendeur pour tendre ledit câble (3) et un ensemble absorbeur (6), pour absorber une charge impulsionnelle,
- ledit tendeur (3) comprenant des moyens (4,12) pour mettre en tension ledit câble (10) ; et,
- ledit absorbeur (6) comprenant :
- un premier support (60), faisant partie intégrante dudit tendeur (3) ;
- un deuxième support (65), relié à une pièce (8) pour fixer ledit dispositif absorbeur-tendeur (1) àune structure ;
- deux enroulements (75) de matériau déformable de manière au moins partiellement irréversible sensiblement parallèles l'un à l'autre, chaque enroulement comprenant une première extrémité reliée audit premier support et une deuxième extrémité reliée audit deuxième support.

2. Dispositif selon la revendication 1,
**caractérisé en ce que** lesdits enroulements de matériau déformable (75) s'étendent selon une direction rectiligne.

3. Dispositif selon l'une des revendications 1 et 2,
**caractérisé en ce que** les spires des enroulements (75) sont jointives.

4. Dispositif selon l'une des revendications 1 à 3,
**caractérisé en ce que** le matériau déformable est de l'acier doux.

5. Dispositif selon l'une des revendications 1 à 4,
**caractérisé en ce que** chaque enroulement a une forme de ressort hélicoïdal.

6. Dispositif selon l'une des revendications 1 à 5,
**caractérisé en ce que** chaque enroulement (75) comprend, à chacune de ses extrémités, des moyens de fixation au support (60,65) respectif, lesdits moyens de fixation comprenant une platine (76a, 76b) de même diamètre que l'enroulement (75).

7. Dispositif selon la revendication 6,
**caractérisé en ce qu'**il comprend, fixée à chaque platine (76a, 76b), une vis (77a, 77) respective s'étendant dans la même direction que l'enroulement.

## Patentansprüche

1. Spann- und Absorbervorrichtung (1) für ein Kabel (10) einer Rettungsleine, umfassend eine Spannvorrichtung zum Spannen des Kabels (3) und eine Absorberanordnung (6) zum Absorbieren einer impulsartigen Last, wobei
- die Spannvorrichtung (3) Mittel (4, 12) zum Spannen des Kabels (10) aufweist; und wobei
- der Absorber (6) umfasst:
- eine erste Halterung (60), die Teil der Spannvorrichtung (3) ist;
- eine zweite Halterung (65), die mit einem Element (8) zum Befestigen der Spann- und Absorbervorrichtung (1) an einer Konstruktion verbunden ist;
- zwei Wickelungen (75) aus einem zumindest teilweise irreversibel verformbaren Material, die im Wesentlichen parallel zueinander angeordnet sind, wobei jede Wickelung ein erstes Ende hat, das mit der ersten Halterung verbunden ist, und ein zweites Ende, das mit der zweiten Halterung verbunden ist.

2. Vorrichtung nach Anspruch 1,
**dadurch gekennzeichnet, dass** die Wickelungen (75) aus verformbarem Material sich in einer geraden Richtung erstrecken.

3. Vorrichtung nach einem der Ansprüche 1 und 2,
**dadurch gekennzeichnet, dass** die Windungen der Wicklungen (75) aneinanderstoßen.

4. Vorrichtung nach einem der Ansprüche 1 bis 3,
**dadurch gekennzeichnet, dass** das verformbare Material Weichstahl ist.

5. Vorrichtung nach einem der Ansprüche 1 bis 4,
**dadurch gekennzeichnet, dass** jede Wicklung die Form einer Schraubenfeder hat.

6. Vorrichtung nach einem der Ansprüche 1 bis 5,
**dadurch gekennzeichnet, dass** jede Wicklung (75) an jedem ihrer Enden Mittel zur Befestigung an der jeweiligen Halterung (60, 65) aufweist, wobei die Mittel zur Befestigung eine Platte (76a, 76b) umfassen, deren Durchmesser der gleiche ist wie der Durchmesser der Wicklung (75).

7. Vorrichtung nach Anspruch 6,
**dadurch gekennzeichnet, dass** diese eine an jeder Platte (76a, 76b) befestigte jeweilige Spindel (77a, 77) aufweist, die sich in der gleichen Richtung erstreckt wie die Wicklung.

## Claims

1. Absorbing/tensioning device (1) for a cable (10) of a lifeline, comprising a tensioning device for tensioning said cable (3) and an absorbing assembly (6), for absorbing a pulsed load,
- said tensioner (3) comprising means (4, 12) for tensioning said cable (10); and
- said absorber (6) comprising:
- a first support (60), forming an integral part of said tensioner (3);
- a second support (65), connected to a part (8) for fixing said absorbing/tensioning device (1) to a structure;
- two coils (75) of material that is at least partially irreversibly deformable, substantially parallel to one another, each coil comprising a first end connected to said first support and a second end connected to said second support.

2. Device according to claim 1, **characterised in that** said coils of deformable material (75) extend in a rectilinear direction.

3. Device according to any of claims 1 and 2, **characterised in that** the turns of the coils (75) are contiguous.

4. Device according to any of claims 1 to 3, **characterised in that** the deformable material is soft steel.

5. Device according to any of claims 1 to 4, **characterised in that** each coil is in the form of a helical spring.

6. Device according to any of claims 1 to 5, **characterised in that** each coil (75) comprises, at each end thereof, means for fixing to the respective support (60, 65), said fixing means comprising a plate (76a, 76b) with the same diameter as the coil (75).

7. Device according to claim 6, **characterised in that** it comprises, fixed to each plate (76a, 76b), a respective screw (77a, 77) extending in the same direction as the coil.
